# EUROPEAN PATENT SPECIFICATION

(11) **EP 0 955 942 B1**
(45) Date of publication and mention of the grant of the patent: **09.05.2007**
(21) Application number: 97935118.6
(22) Date of filing: 03.07.1997
(51) Int. Cl.: A61C 8/00

(54) **DENTAL PROSTHESIS**
ZAHNERSATZ
PROTHESE DENTAIRE

(30) Priority: 12.07.1996 US 679223
(43) Date of publication of application: 17.11.1999
(73) Proprietor: Callan, Donald P., Little Rock, AR 72212 (US)
(72) Inventor: Callan, Donald P., Little Rock, AR 72212 (US)
(74) Representative: Mackenzie, Andrew Bryan
(86) International application number: PCT/US1997/013096
(87) International publication number: WO 1998/002110

(56) References cited:
- EP-A- 0 702 940
- FR-A- 2 634 369
- US-A- 4 531 915
- US-A- 5 316 477
- US-A- 5 620 323

## Description

### Field of the Invention

The present invention relates to the field of dental prostheses and, in particular, to an apparatus and method for a dental prosthesis which includes a crown having a prosthetic margin extending past the joint between an abutment to which the crown is attached and an implant to which the abutment is attached.

### Background of the Invention

Dental prostheses are a common approach to address extensive damage to teeth caused by injury or disease. A typical dental prosthesis includes an implant, an abutment and a crown. The implant is generally a metallic component which is implanted into the bony structure of a patient's mouth after suitably removing the damaged tooth or teeth and perhaps one or more adjacent teeth. The implant is commonly installed by preparing a hole in the bony structure and screwing threads on a shaft of the distal end of the implant into the hole. The bone normally recovers and grows around the implant to result in bone integration. The implant may be smooth, etched or may be coated with biocompatible coatings such as hydroxylapatite which enhance bone integration around the implant. The usual procedure is to install the implant, and then allow integration of the implant.

The proximal end of the implant includes a means for attachment of the abutment such as cement, male or female threads, tapers or other geometries. The abutment component extends from the implant to beyond the gum line, and includes at its distal end an attachment means which mates with the attachment means of the proximal end of the implant. If the implant was installed with the proximal end below the gumline - or submerged - then the installation of the abutment to the implant requires a second surgical procedure for the purpose of accessing the implant. If installed nonsubmerged, then only a single surgical procedure is required.

The shaft of the abutment extending proximally is adapted to receive the crown. Crowns are fabricated and installed in accordance with well-established procedures which include taking a transfer impression of the abutment to establish precisely the configuration and orientation of the abutment to which the crown will attach. Abutments to which crowns are attached may be natural in the form of prepared teeth, or artificial in the form of the abutments described above. The completed crown is cemented or screwed to the abutment to complete the prosthesis.

The joining of the implant, abutment and crown results in several distinct joints. An important joint for consideration in the long-term viability of the prosthesis is the joint between the implant and the abutment which is referred to as the implant abutment joint or "IAJ." Recent research suggest that the IAJ plays a key role in bone loss around the neck of the implant.

Such "bone loss" has not been well studied or well documented, but is believed by the dental profession to be a common occurrence. Over time, bone loss can compromise the implant or even cause it to fail by breaking loose from the bony structure in which it is implanted. Aside from the obvious inconvenience and discomfort this causes the patient, it is of serious medical concern because the resulting bone loss or mutilation may render the installation of a replacement implant difficult or impossible.

It has been stated that bone loss at the neck of the dental implant is a normal occurrence and eventually reaches a steady state; Adell R, Lekholm U, Rockler B, Branemark P-I, Lindhe J. Eriksson B, Sbordone L. Marginal tissue reactions at osseointegrated titanium fixtures: a three-year longitudinal prospective study. *Int J Oral Maxillofac Surg* 1986;1:39-52; Cox JF, Zarb GA. The longitudinal clinical efficiency of osseointegrated dental implants: a three-year report. *Int J Oral Maxillofac Implants* 1987;2:91-100; Quirynen M, Naert I, Van Steenberghe D, Nys L. A study of 589 consecutive implants supporting complete fixed prostheses, part I: periodontal aspects. *J Prosthet Dent* 1992;68:655-663. Another view suggest that surgical trauma either during placement of the implant or at the time of second-stage surgery may play a role in inducing coronal bone loss; Adell R, Lekholm U, Rockler B, Branemark P-I, Lindhe J. Eriksson B, Sbordone L. marginal tissue reactions at osseointegrated titanium fixtures: a three-year longitudinal prospective study. Int *J Oral Maxillofac Surg* 1986;1:39-52; Apse P. Allen PP, overall CM, Zarb GA. Microbiota and crevicular fluid collagenase activity in the osseointegrated dental implant sulcus: a comparison of sites in edentulous and partially edentulous patients. *J Periodont Res* 1989;24:96-105; Haraldson T. A photoelastic study of some biomechanical factors affecting the anchorage of osseointegrated implants in the jaw. *Scand J Plast Reconstr Surg* 1980;14: 209-214; Plank H Jr, Haider R. Velikogne W. Lill W. Watzek G. The effects of drilling on endosseous implant fixation. *Fourth World Biomaterials Congress 1992;* Berlin, Germany. Occlusal trauma also has been cited as a causative factor; Misch CE. Progressive Bone Loading. In: Misch CE, ed. Contemporary *implant dentistry.* St. Louis, Mo.:C.V. Mosby; 1993: 623-650; Bidez MW, Misch CE. Force transfer in implant dentistry: basic concepts and principles. *J Oral Implant* 1992;18:264-274. A compelling chain of evidence furthermore indicates that the role of bacterial invasion may be significant; Zablotsky MH, Diedrich DL, Meffert RM. Detoxification of endotoxin-contaminated titanium and hydroxyapatite-coated surfaces utilizing various chemotherapeutic and mechanical modalities. *Implant Dent* 1992;154-158; Zablotsky MH, Diedrich DL, Meffert RM, Witting E. The ability of various chemotherapeutic agents to detoxify the endotoxin-infected HA-coated implant surface. *Int J oral Implant* 1991;8:45-51; Dennison DK, Huerzeler MB, Quinones C, Caffesse RG. contaminated implant surfaces: an in vitro comparison of implant surface coating and treatment modalities for decontamination. *J Periodontal* 1994;65:942-948; Nakou M, Mikx FHM, Oosterwool PJM, Kruijsen JCWM. Early microbial colonization of permucosal implants in edentulous patients. *J Dent Res* 1987;11:1654-1657; Zablotsky MH, Wittrig EE, Diedrich DL, Layman DL, Meffert RM. Fibroblastic growth and attachment on hydroxyapatite-coated titanium surfaces following the use of various detoxification modalities, part II: contaminated hydroxyapatite. *Implant Dent* 1992;1:195-202; Newman MG, Flemming TF implants and implant-assoc 1988;52:737-744. Periodontal considerations of implants and implant-associated microbiota. *J Dent Ed* 1988; 52:737-744; Mombelli A, Lang NP. Microbial aspects of implant dentistry. *Periodontology 2000* 1994;4:74-80; Mombelli A, Van Oosten MAC, Schuerch EJ, Lang NP. The microbiota associated with the successful or failing osseointegrated titanium implants. *Oral Microbial Immunol* 1987;2:145-151; Brandes R. Beamer B. Holt SC. Clinical-microscopic observation of ligature induced "peri-implantitis" around osseointegrated implants. *J Dent Res* 1988;67 (special issue):287 (abstr 1397); Ong ESM, Newman HN, Wilson M, Bulman JS. The occurrence of periodontitis-related microorganisms in relation to titanium implants. *J Periodontal* 1992;63:200-205; Gruder U. Hunzeler MB, Schupbach P. Strub JR. Treatment of ligature-induced perio-implantitis using guided tissue regeneration. A clinical and histological study in the beagle dog. *Int J Oral Maxillofac Implants* 1993;8:282-293; Schou S. Holmstrup P. Kornman KS. Non-human primates used in studies of periodontal disease pathogenesis. A review of the literature. *J Periodontal* 1993;64: 497-508; Schou S. Holmstrup P. Reibel J. Juhl M. Hjorting-Hansen E, Kornman KS. Ligature-induced marginal inflammation around osseointegrated implants and ankylosed teeth. Serologic and histologic observations in cynomolgus monkeys (Macaca fascicularis). *J Periodontal* 1993;64:529-537.

Dental plaque irritates tissue and leads to gingivitis and periodontitis; Zablotsky MH, Wittrig EE, Diedrich DL, Layman DL, Meffert RM. Fibroblastic growth and attachment on hydroxyapatite-coated titanium surfaces following the use of various detoxification modalities, part II: contaminated hydroxyapatite. *Implant Dent* 1992;1:195-202; Newman MG, Flemming TF implants and implant-assoc 1988;52:737-744. Periodontal considerations of implants and implant-associated microbiota. *J Dent Ed* 1988; 52:737-744; Mombelli A, Van Oosten MAC, Schuerch EJ, Lang NP. The microbiota associated with the successful or failing osseointegrated titanium implants. *Oral Microbial Immunol* 1987;2:145-151; Brandes R. Beamer B. Holt SC. Clinical-microscopic observation of ligature induced "peri-implantitis" around osseointegrated implants. *J Dent Res* 1988;67 (special issue):287 (abstr 1397); Ong ESM, Newman HN, Wilson M, Bulman JS. The occurrence of periodontitis-related microorganisms in relation to titanium implants. *J Periodontal* 1992;63:200-205. A limited number of studies have suggested some differences in the way bacteria adheres to and plaque forms on artificial surfaces such as titanium; Zablotsky MH, Wittrig EE, Diedrich DL, Layman DL, Meffert RM. Fibroblastic growth and attachment on hydroxyapatite-coated titanium surfaces following the use of various detoxification modalities, part II: contaminated hydroxyapatite. *Implant Dent* 1992;1:195-202; Newman MG, Flemming TF implants and implant-assoc 1988;52:737-744. Periodontal considerations of implants and implant-associated microbiota. *J Dent Ed* 1988; 52:737-744; Mombelli A, Van Oosten MAC, Schuerch EJ, Lang NP. The microbiota associated with the successful or failing osseointegrated titanium implants. *Oral Microbial Immunol* 1987;2:145-151; Brandes R. Beamer B. Holt SC. Clinical-microscopic observation of ligature induced "peri-implantitis" around osseointegrated implants. *J Dent Res* 1988;67 (special issue):287 (abstr 1397); Ong ESM, Newman HN, Wilson M, Bulman JS. The occurrence of periodontitis-related microorganisms in relation to titanium implants. *J Periodontal* 1992;63:200-205; Nakazato G. Tsuchiya H. Sato M, Yamauchi M. In vitro plaque formation on implant materials. *Int J Marillofac Impl* 1986;4:321-325; compared to natural oral hard tissues; Gould T. Brunette D. Ultrastructural study of the attachment of human gingiva to titanium in vitro. *J Prosthet Dent* 1984;52:418-420. Regardless of the precise mechanism for bacterial attachment, however, evidence is ample that supragingival and subgingival bacterial colonization can occur after dental implants have been inserted; Fryioka-Hirai Y. Akagawa Y. Minagi S. Tsuru H. Miyake Y. Suginaka H. Adherence of streptococcus mutans to implants. *J. Periodontal* 1992; 63:200-205. Moreover, both clinical and microbial findings indicate that the bacterial flora around failing implants are the same as or very similar to those implicated as pathogens in periodontal disease; Adell R. Lekholm 0, Rockler B. Branemark P-I, Lindhe *J*. Eriksson B. Sbordone L. Marginal tissue reactions at osseointegrated titanium fixtures: a three-year longitudinal prospective study. *Int J Oral Maxillofac Surg 1986*;1:39-52; Apse P. Allen PP, Overall CM, Zarb GA. Microbiota and crevicular fluid collagenase activity in the osseointegrated dental implant sulcus: a comparison of sites in edentulous and partially edentulous patients. *J Periodont Res 1989*; 24:96-105. Mombelli A, Van oosten MAC, Schuerch EJ, Lang NP. The microbiota associated with the successful or failing osseointegrated titanium implants. *Oral Microbial Immunol* 1987;2:145-151; Brandes R. Beamer B. Holt SC. Clinical-microscopic observation of ligature induced "peri-implantitis" around osseointegrated implants. *J Dent Res* 1988;67 (special issue):287 (abstr 1397); Ong ESM, Newman HN, Wilson M, Bulman JS. The occurrence of periodontitis-related microorganisms in relation to titanium implants. *J Periodontal* 1992; 63:200-205. Mombelli A, Van Oosten MAC, Schuerch E, Lang NP. The microbiotia associated with successful or failing osseointegrated titanium implants. *Oral Microbial Immunol* 1987;2:145-151. Rams TE, Link CC. Microbiology of failing dental implants in humans: electron microscope observations. *Oral Implantal* 1983;11:93-110; Joshi RI, Eley A. The in vitro effect of a titanium implant on oral microflora: comparison with other metallic compounds. *J Med Microbiol* 1988;27:105-107; Lekholm U. Eriksson I, Adell R. Slots J*.* The condition of the soft tissues at tooth and fixture abutments supporting fixed bridges. A microbiological and histological study. *J Clin Periodontal* 1986; 13:558-562; Mombelli A, Buser D, Lang NP. Colonization of osseointegrated titanium implants in edentulous patients: early results. *Oral Microbial Immunol* 1988;3:113-120; Rams TE, Roberts H. Tatum H. Keyes PH. The subgingival microbial flora associated with human dental implants. *J Prosth Dent* 1984; 51:529-534; Mombelli A, Merieske-Stern R. Microbiological features of stable osseointegrated implants used as abutments for overdentures. Clin *Oral Implant Res* 1990;1:1-7; George K, Zafiropoulos GGK, Murat Y. Hubertus S. Nisengard RJ. Clinical and microbiological status of osseointegrated implants. *J Periodontal* 1994;65:766-770. Both periodontitis and peri-implantitis exhibit virtually identical signs: bleeding upon gentle probing, suppuration, pocket formation, and bone loss.

A number of studies have demonstrated the existence of hemidesmosomal attachment to titanium; Gould T. Brunette D, Westbury L. The attachment mechanisms of epithelial cells to titanium in vitro. *J Periodont Res* 1981; 10:68-79; James RA, Schultz RL. Hemidesmosomes and the adhesion of junctional epithelial cells to metal implants: a preliminary report. *J Oral Implant* 1973;4:294-302; Listgarten MA, Lai CH. Ultrastructure of the intact interface between an endosseous epoxy resin dental implant and the host tissue. *J Biol* Buccale 1975;3:13-28; McKinney R. Steflik DE, Koth DL. Evidence for a junctional epithelial attachment to ceramic dental implants. *J Periodontal* 1985;56:579-591; Buser D, Weber HP, Lang NP. Tissue integration of nonsubmerged implants. *Clin Oral Implants Res* 1990;1:33-40; ten Bruggenkate CM, Muller K, Oosterbeek HS. Clinical evaluation of the ITI (F-type) hollow cylinder implant. *Oral Surg Oral Med Oral Pathol* 1990;70:693-697; Gotfredsen K, Rostrup E, Hjoerting-Hansen E, Stoltze K, Budtz-Jorgensen E. Histological and histomophometrical evaluation of tissue reactions adjacent to endosteal implants in monkeys. *Clin Oral Implants Res* 1991;2:30-37; Buser D, Weber HP, Bragger U. Balsiger C. Tissue integration of one-stage ITI implants: three-year results of a longitudinal study with hollow-cylinder and hollow-screw implants. *Int J Oral Maxillofac Implants* 1991;6:405-412; Alberektsson T. Branemark P-I, Hansson H-A, Lindstrom J. Osseointegrated titanium implants. Requirements for ensuring a long-lasting direct bone-to-implant anchorage in man. *Acta Orthop Scand* 1981;52:155-170. Due to the delicate epithelial-implant interface; Gould T. Brunette D. Ultrastructural study of the attachment of human gingiva to titanium in vitro. *J Prosthet Dent* 1984;52:418-420, plaque control is needed to maintain this attachment and preserve the peri-implant soft tissue health; Wolinsky EL, de Camargo PM, Erard JC, Newman MG. A study of in vitro attachment of streptococcus sanguis and actinomyces viscosus to salvia-treated titanium. *Int J Oral Maxillofac Impl* 1989;4: 27-31; Thomson-Neal D, Evans G. Meffert RM, Davenport WD. A SEM evaluation to various prophylactic modalities on different implants. *Int J Perio Rest Dent* 1989;9:301-311; Rapley JW, Swan RH, Hallmon WW, Mills MP. The surface characteristics produced by various oral hygiene instruments and materials on titanium implant abutments. *Int J Oral Maxillofac Implants* 1990;5:47-51; Meffert RM. The importance of periodontal maintenance for the dental implant. *Pract Periodont Aesth Dent* 1990;2: 19-22.

Modern oral implant systems provide easy access to the exposed surfaces on which bacterial colonization may occur. Removal Of bacterial aggregates from these surfaces by means of local mechanical or anti-microbial intervention offers the possibility of some control over bacterial colonization; Wolinsky EL, de Camargo PM, Erard JC, Newman MG. A study of in vitro attachment of streptococcus sanguis and actinomyces viscosus to salvia-treated titanium. Int *J Oral Maxillofac Impl* 1989;4: 27-31; Thomson-Neal D, Evans G. Meffert RM, Davenport WD. A SEM evaluation to various prophylactic modalities on different implants. *Int J Perio Rest Dent* 1989;9:301-311; Rapley JW, Swan RH, Hallmon WW, Mills MP. The surface characteristics produced by various oral hygiene instruments and materials on titanium implant abutments. *Int J Oral Maxillofac Implants* 1990;5:47-51; Meffert RM. The importance of periodontal maintenance for the dental implant. *Pract Periodont Aesth Dent* 1990;2: 19-22. It is the clinician's responsibility to educate the dental implant patient about proper oral hygiene procedures, including methods for removing existing bacterial plaque thoroughly and preventing new plaque formation. Once informed, the patient bears the responsibility for performing the necessary maintenance.

This responsibility is a critical one. Numerous studies have demonstrated a link between poor oral hygiene procedures and the occurrence of peri-implantitis; Zablotsky MH, Wittrig EE, Diedrich DL, Layman DL, Meffert RM. Fibroblastic growth and attachment on hydroxyapatite-coated titanium surfaces following the use of various detoxification modalities, part II: contaminated hydroxyapatite. *Implant Dent* 1992;1:195-202; Newman MG, Flemming TF implants and implant-assoc 1988;52:737-744. Periodontal considerations of implants and implant-associated microbiota. *J Dent Ed* 1988; 52:737-744; Mombelli A, Lang NP. Microbial aspects of implant dentistry. *Periodontology 2000* 1994;4:74-80; Mombelli A, Van Oosten MAC, Schuerch EJ, Lang NP. The microbiota associated with the successful or failing osseointegrated titanium implants. *Oral Microbial Immunol* 1987;2:145-151; Brandes R. Beamer B. Holt SC. Clinical-microscopic observation of ligature induced "peri-implantitis" around osseointegrated implants. *J Dent Res* 1988;67 (special issue):287 (abstr 1397); Ong ESM, Newman HN, Wilson M, Bulman JS. The occurrence of periodontitis-related microorganisms in relation to titanium implants. *J Periodontal* 1992;63:200-205; Gruder U. Hunzeler MB, Schupbach P. Strub JR. Treatment of ligature-induced perio-implantitis using guided tissue regeneration. A clinical and histological study in the beagle dog. *Int J Oral Maxillofac Implants* 1993;8:282-293; Schou S. Holmstrup P. Kornman KS. Non-human primates used in studies of periodontal disease pathogenesis. A review of the literature. *J Periodontal* 1993;64: 497-508; Schou S. Holmstrup P. Reibel J. Juhl M. Hjorting-Hansen E, Kornman KS. Ligature-induced marginal inflammation around osseointegrated implants and ankylosed teeth. Serologic and histologic observations in cynomolgus monkeys (Macaca fascicularis). *J Periodontal* 1993;64:529-537. Other studies of implantitis patients whose problems have been corrected indicate that instituting good oral hygiene can prevent a reoccurrence of infection; Zablotsky MH, Diedrich DL, Meffert RM. Detoxification of endotoxin-contaminated titanium and hydroxyapatite-coated surfaces utilizing various chemotherapeutic and mechanical modalities. *Implant Dent* 1992;154-158; Zablotsky MH, Diedrich DL, Meffert RM, Witting E. The ability of various chemotherapeutic agents to detoxify the endotoxin-infected HA-coated implant surface. *Int J Oral Implant* 1991;8:45-51; Dennison DK, Huerzeler MB, Quinones C, Caffesse RG. Contaminated implant surfaces: an in vitro comparison of implant surface coating and treatment modalities for decontamination. *J Periodontal* 1994;65:942-948; Nakou M, Mikx FHM, Oosterwool PJM, Kruijsen JCWM. Early microbial colonization of permucosal implants in edentulous patients. *J Dent Res* 1987;11:1654-1657. At the same time, however, patients may have the ability, knowledge, and willingness to maintain the implant prosthesis and yet still develop problems. In such cases, the design and/or placement protocol of the implant system may be preventing the patient and clinician from achieving adequate maintenance at the IAJ.

US Patent No. 5,316,477 issued to Calderon discloses a frustoconical abutment which is designed to provide support for oral restorative prostheses such as crowns, fixed partial dentures, removable partial dentures or full dentures. More specifically, such abutment is adapted to engage with an implant generally below the gingival margin. The frustoconical abutment allows a dentist to reduce the mass to form a resulting shape which corrects the lack of parallelism of misaligned implants.

European Patent Application No. EP-A-) 702 940 filed by Bressman et al discloses a dental restoration structure comprising an implant and a crown structure which is sized and configured to be connected to the implant. In particular, the implant is a self-cutting implant which is anchorable in a jawbone. Furthermore, the crown structure has an interior shape and dimensions which can mate over a crown end of means to as to connect the crown structure to the implant.

US Patent No. 4,531,915 issued to Tatum, Jr, discloses a dental implant according to the preamble of claim 1, used for rigidly securing a prosthesis in a natural or a prepared jawbone socket. The dental implant comprises a post having a plurality of fins which extend radially outward along an entire longitudinal length thereof. A boss is integrally formed at the proximal end of the post in order to threadably receive a support cone. A prosthesis such as a crown is then secured to the support cone.

French Patent Application No. FR-A-2634369 filed by Malek discloses a dental implant system. More particularly, such dental implant comprises a crown structure which is attached to an abutment. The attached crown structure and abutment is further attached to an implant.

### Summary of the Invention

The present invention provides a dental prosthesis for use with a patient, comprising: an implant adapted for implantation in a bony structure of an oral cavity, the implant having an implant distal end for implantation in said bony structure and an implant proximal end opposite the implant distal end, an abutment having an abutment distal end secured to the implant proximal and to define an implant abutment joint where an exterior surface of the abutment meets an exterior surface of the implant, and an abutment proximal end opposite the abutment distal end; and a crown, the crown having a crown distal end adhered to the abutment proximal end and adhered to the implant proximal end and a crown proximal end opposite the crown distal end, the crown distal end having a peripheral prosthetic margin positioned distally from the implant abutment joint such that the crown covers the entire implant abutment joint and the adhesion between the crown distal end and the implant proximal end seals the implant abutment joint.

The present invention is designed to lessen bone loss around the neck of a dental prosthesis implant by covering the IAJ with the crown or suitable prosthesis.

In a preferred embodiment, the prosthesis includes an implant having a conventional implant body for implantation into the bony structure of the oral cavity or other body areas. The neck of the implant includes a first portion distal to the prosthetic margin of the crown and a second portion proximal to the prosthetic margin. The IAJ which defines the surface boundary between the implant and the abutment is located proximal to the prosthetic margin. Thus, the IAJ is covered by the crown.

The covering of the IAJ with the crown, achieved by extending the margin distally from the IAJ along the implant, isolates the IAJ and any microgap at the IAJ from bacterial invasion, plaque, contamination and other deteriorations effects. This results in a number of benefits to the implant manufacturer, the dentist and the patient. Bone loss is lessened or eliminated at the implant neck because disease is unable to thrive in and around the IAJ. A second major benefit is the antirotation of this type of connection of the prosthesis to the implant. The installation procedure is straightforward using techniques already familiar to the dental profession. Moreover, the responsibility for ensuring a close fit of the implant joint is shifted from the implant manufacturer which produces the implant and abutment joined at the IAJ, to the dentist or laboratory technician who produces the crown for fitting onto the implant system being utilized. The fabrication and fitting of the crown onto the abutment with the crown margin extending onto the implant is similar to the fabrication and fitting of ordinary crowns onto natural teeth, a procedure with which most dentists are familiar.

Several implant configurations are taught in the detailed description below, including a slightly tapered neck in the portion proximal to the prosthetic margin; a tapered neck with a curved boundary at the prosthetic margin; a tapered neck with an abrupt squared-off boundary of the prosthetic margin; and a highly tapered neck in the portion proximal to the prosthetic margin. The implant may be of any conventional material, coated or uncoated, with a configuration and dimensions suitable for routine surgical implant placement.

### Brief Description of the Drawings

FIG. 1 is an exploded perspective view of a prosthesis in accordance with the present invention, including a crown, abutment and implant.
FIG. 2 is a perspective view of an assembled prosthesis.
FIG. 3 is a side sectional view of an assembled prosthesis.
FIG. 4 is a side sectional view of a portion of a prosthesis in accordance with the present invention.
FIG. 5 is a side sectional view of a portion of an alternative embodiment.
FIG. 6 is a side sectional view of a portion of another alternative embodiment .
FIG. 7 is a side sectional view of a portion of another alternative embodiment.
FIG. 8 is a side sectional view of a portion of another alternative embodiment.
FIG. 9 is a side sectional view of a portion of another alternative embodiment.

### Detailed Description of the Invention

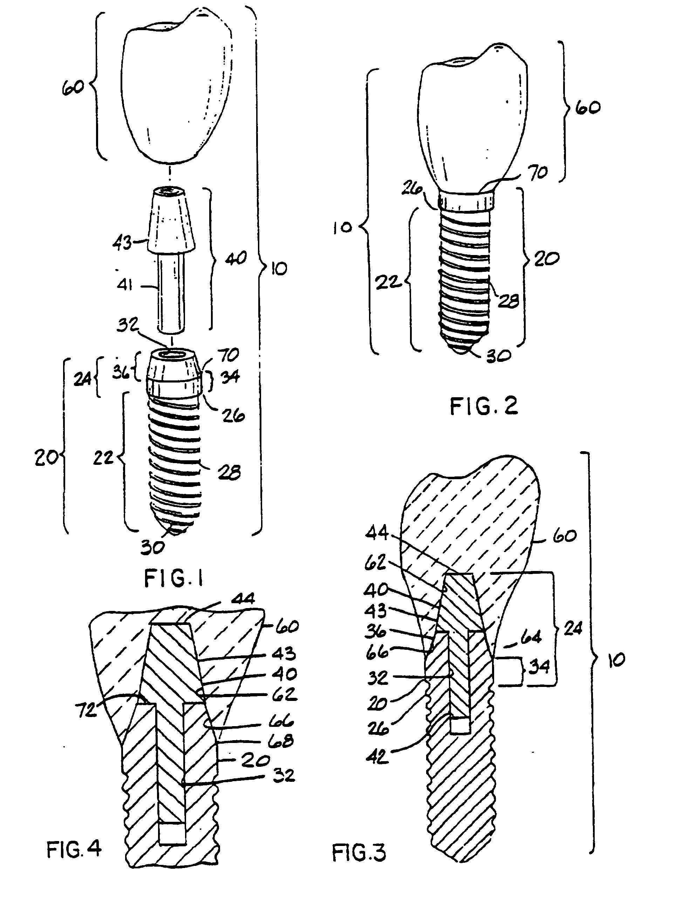

An exploded perspective view, and an assembled perspective view, of a prosthesis 10 are shown in FIGs. 1 and 2 respectively. The principal components of the prosthesis 10 are an implant 20, an abutment 40 and a crown 60. The implant 20 in a first preferred embodiment includes an implant body 22 and an implant neck 24 which meet at a neck junction 26. The implant body 22 is of any conventional design, typically including threads 28 and terminating in a distal end 30 of any design. The implant body 22 may be uncoated or may be coated with hydroxylapatite or other suitable biocompatible material to assist in integration, and may be unetched or etched with a suitable acid or other solution.

The abutment 40 may be very simple in design as shown in FIG. 1, consisting in the preferred embodiment of a shaft 41 and a truncated cone 43. The abutment is generally metalic and is received by the inner area 32 of the implant 20. The attachment of the abutment to the implant 20 may be by a suitable adhesive, or may be accomplished in a mechanical fashion by hex joints, threads or other attachment means well known in the art, some of which are depicted in the alternative embodiments described below. The crown 60 is of a conventional inert biocompatible material such as ceramic or metal or both, and is configured in the desired exterior surface configuration in the manner known in the art.

The sectional views of FIGs. 3 and 4 show the interrelation among the implant 20, abutment 40 and crown 60 of the present invention. The abutment distal end 42 is received by the inner area 32 of the implant 20, and abutment proximal end 44 is received by the crown 60. Suitable adhesive is used to attach the crown 60 to the abutment 40, and suitable adhesive or mechanical means or both are used to attach the abutment 40 to the implant 20.

The implant neck 24 includes a tapered portion 36 and a nontapered portion 34 which meet at the prosthetic margin 70. The tapered portion 36 is in the shape of a truncated one, and the non-tapered portion 34 is substantially cylindrical. The crown 60 includes a blind hole 62 in the distal end 64 to receive the abutment 40, and a larger chamfered hole 66 leading to the blind hole 62 to receive the tapered portion 36 of the implant 20. The tapered portion 36 of the implant 20 and the conical portion 43 of the abutment 40 thus are snugly received by the crown 60.

The provision of a tapered portion 36 of the implant 20 and a chamfered hole 66 in the crown 60 ensures that the IAJ 72 defining the boundary between the implant 20 and abutment 40 is completely covered by the prosthesis 60. The prosthetic margin 68 is distal to the IAJ 72. The IAJ is therefore completely isolated from the deteriorous effects of bacterial invasion, plaque and disease.

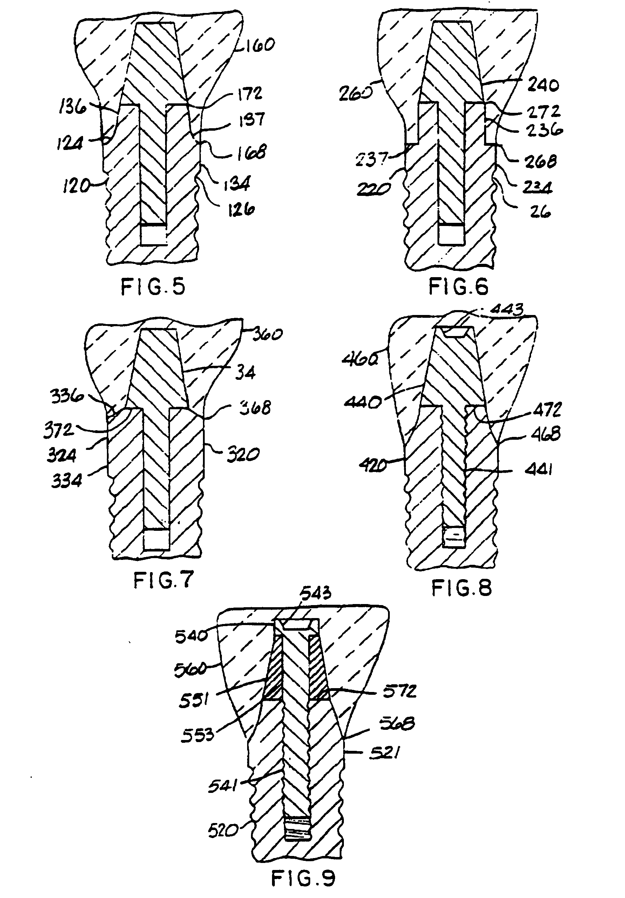

Other embodiments of the invention are depicted in the views of FIGs. 5-9. In FIG. 5, the implant 120 includes a neck 124 having a substantially cylindrical portion 134 similar to the substantially cylindrical portion 34 of the embodiment of FIG. 4, and a narrowed portion 136. The substantially cylindrical portion 134 and the narrowed portion 136 are joined by a transition portion 137 having a curved surface as viewed in two dimensions, or a cone-like surface when viewed in three dimensions. The embodiment of FIG. 5, like that of FIGs. 1-4, serves to cover completely the IAJ 172 with the prosthesis 160, since the prosthetic margin 168 is well distal to the IAJ 172. Further, the embodiment of FIG. 5 avoids any knife-edge at the prosthetic margin 168 which could be susceptible to breakage or other damage in the case of a ceramic crown. A knife-edge is acceptable in the case of crowns having a prosthetic margin of gold or other mallable material, as shown in other embodiments herein.

The embodiment of FIG. 6 is similar to the embodiment of FIG. 5, except that the transition portion 237 between the substantially cylindrical portion 234 and the narrowed portion 236 of the implant 220, is abrupt or squared_off rather than rounded. The result is still that the IAJ 272 between the implant 220 and the abutment 240 is completely covered by the prosthesis 260, because the prosthetic margin 268 extends sufficiently distal of the IAJ 272. As in the embodiment of FIG. 5, the embodiment of FIG. 6 avoids any vulnerable knife-edge at the prosthetic margin 268.

Yet another embodiment is shown in FIG. 7. The embodiment of FIG. 7 again includes a substantially cylindrical portion 334 of the neck 324 of the implant 320. The remainder of the neck 324, however, is a substantially tapered portion 336. Thus the IAJ 372 defined by the boundary between the abutment 340 and implant 320 is covered by the prosthesis 360 due to the location of the prosthetic margin 368 distal to the IAJ 372.

Another embodiment is shown in FIG. 8. The embodiment of FIG. 8 is similar to that of FIGS. 1-4 except that the abutment shaft 42 is threaded 441 in order to be threadably received by the implant 420. A recess 443 is provided in the top of the abutment 440, having a wrench pattern to rotate the abutment 440 in order to thread it into the implant 420. The crown 460 covers the IAJ 472 as the prosthetic margin 468 is located distally thereto.

A final embodiment is depicted in FIG. 9. The abutment 540 includes a shaft 553 and an abutment 551 extending around the upper portion of the shaft 553. The lower portion of the shaft 553 is threaded 541 and is threadably received by the implant 520. The upper portion of the shaft 553 includes a recess 543 to receive a wrench or other tool for threading the shaft 553 into the implant 520. An advantage to this two-piece design for the abutment 540 is that the abutment 551 can be chosen from a variety of configurations depending on use parameters. As in the other embodiments, the prosthetic margin 568 is distal to the IAJ 572 to ensure that the IAJ is covered by the crown 560.

## Claims

1. A dental prosthesis (10) for use with a patient, comprising:
an implant (20) adapted for implantation in a bony structure of an oral cavity, the implant (20) having an implant distal end (30) for implantation in said bony structure and an implant proximal end (36) opposite the implant distal end (30),
an abutment (40) having an abutment distal end (43) secured to the implant proximal end (36) to define an implant abutment joint (72) where an exterior surface of the abutment (40) meets an exterior surface of the implant (20), and an abutment proximal end (44) opposite the abutment distal end (42); and
a crown (60), the crown (60) having a crown distal end (64) adhered to the abutment proximal end (44) and a crown proximal end opposite the crown distal end,
the crown distal end having a peripheral prosthetic margin (68) positioned distally from the implant abutment joint (72) such that the crown (60) covers the entire implant abutment joint (72) and **characterized in that** the crown distal end (64) is adhered to the implant proximal end (36) and that the adhesion between the crown distal end (64) and the implant proximal end (36) seals the implant abutment joint (72).

2. The prosthesis of claim 1, wherein the implant includes a body and a neck in a proximal direction in relation to the body, the neck having a first portion with a first width and a second portion in a proximal direction in relation to the body having a second width, the second width being less than the first width whereby the crown extends over the second width and not over the first width.

3. The prosthesis of claim 2, wherein the second portion is tapered.

4. The prosthesis of claim 3, wherein the second portion is substantially conical and wherein the first portion and second portion are joined by a curved portion.

5. The prosthesis of claim 4, wherein the abutment distal end includes a shaft attached to the implant and the abutment proximal end includes a head attached to the crown.

6. The prosthesis of claim 5, wherein the abutment head narrows in the proximal direction.

7. The prosthesis of claim 6, wherein the abutment head is substantially conical.

8. The prosthesis of claim 7, wherein the abutment head is substantially a truncated cone.

9. The prosthesis of claim 8, wherein the abutment head and implant second portion form a substantially truncated cone.

10. The prosthesis of claim 1, wherein the second portion is substantially cylindrical.

11. The prosthesis of claim 1, wherein the abutment is threadably attached to the implant by threads on an abutment shaft on the abutment distal end.

12. The prosthesis of claim 11, wherein the abutment proximal end includes means for engaging a tool to rotate the abutment to thread the abutment shaft into the implant.

13. The prosthesis of claim 12, wherein the abutment includes a collar separate from and positionable on the shaft, the collar having a width greater than a width of the shaft.

## Patentansprüche

1. Zahnprothese (10) zur Verwendung bei einem Patienten, die Folgendes umfasst:
ein Implantat (20), eingerichtet zum Implantieren in eine Knochenstruktur einer Mundhöhle, wobei das Implantat (20) ein distales Implantatende (30) zum Implantieren in die Knochenstruktur und ein proximales Implantatende (36) gegenüber dem distalen Implantatende (30) hat,
ein Widerlager (40), das ein distales Widerlagerende (43), befestigt am proximalen Implantatende (36), um eine Implantat-Widerlager-Verbindung (72) zu definieren, wo eine Außenfläche des Widerlagers (40) auf eine Außenfläche des Implantats (20) trifft, und ein proximales Widerlagerende (44) gegenüber dem distalen Widerlagerende (42) hat, und
eine Krone (60), wobei die Krone (60) ein distales Kronenende (64), geklebt an das proximale Widerlagerende (44), und ein proximales Kronenende gegenüber dem distalen Kronenende hat,
wobei das distale Kronenende einen umlaufenden Prothesenrand (68) hat, angeordnet in distaler Richtung von der Implantat-Widerlager-Verbindung (72) derart, dass die Krone (60) die Implantat-Widerlager-Verbindung (72) bedeckt, und **dadurch gekennzeichnet, dass** das distale Kronenende (64) an das proximale Implantatende (36) geklebt ist und dass die Haftung zwischen dem distalen Kronenende (64) und dem proximalen Implantatende (36) die Implantat-Widerlager-Verbindung (72) abdichtet.

2. Prothese nach Anspruch 1, wobei das Implantat einen Körper und in einer proximalen Richtung im Verhältnis zu dem Körper einen Hals einschließt, wobei der Hals einen ersten Abschnitt mit einer ersten Breite und in einer proximalen Richtung im Verhältnis zu dem Körper einen zweiten Abschnitt, der eine zweite Breite hat, hat, wobei die zweite Breite geringer ist als die erste Breite, wodurch sich die Krone über die zweite Breite und nicht über die erste Breite erstreckt.

3. Prothese nach Anspruch 2, wobei der zweite Abschnitt verjüngt ist.

4. Prothese nach Anspruch 3, wobei der zweite Abschnitt wesentlich kegelförmig ist und wobei der erste Abschnitt und der zweite Abschnitt durch einen gekrümmten Abschnitt verbunden sind.

5. Prothese nach Anspruch 4, wobei das distale Widerlagerende einen an dem Implantat befestigten Schaft einschließt und das proximale Widerlagerende einen an der Krone befestigten Kopf einschließt.

6. Prothese nach Anspruch 5, wobei sich der Widerlagerkopf in der proximalen Richtung verengt.

7. Prothese nach Anspruch 6, wobei der Widerlagerkopf wesentlich kegelförmig ist.

8. Prothese nach Anspruch 7, wobei der Widerlagerkopf wesentlich ein abgestumpfter Kegel ist.

9. Prothese nach Anspruch 8, wobei der Widerlagerkopf und der zweite Implantatabschnitt einen wesentlich abgestumpften Kegel bilden.

10. Prothese nach Anspruch 1, wobei der zweite Abschnitt wesentlich zylindrisch ist.

11. Prothese nach Anspruch 1, wobei das Widerlager durch Gewindegänge an einem Widerlagerschaft am distalen Widerlagerende schraubend an dem Implantat befestigt wird.

12. Prothese nach Anspruch 11, wobei das proximale Widerlagerende Mittel einschließt, um ein Werkzeug in Eingriff zu nehmen, um das Widerlager zu drehen, um den Widerlagerschaft in das Implantat zu schrauben.

13. Prothese nach Anspruch 12, wobei das Widerlager einen vom Schaft gesonderten und an demselben anzuordnenden Bund einschließt, wobei der Bund eine Breite hat, die größer ist als eine Breite des Schafts.

## Revendications

1. Prothèse dentaire (10) destinée à être utilisée sur un patient, comprenant:
un implant (20) adapté à être implanté dans une structure osseuse d'une cavité orale, l'implant (20) comportant une extrémité distale d'implant (30) en vue d'une implantation dans ladite structure osseuse et une extrémité proximale d'implant (36) opposée à l'extrémité distale de l'implant (30);
un pilier (40) comportant une extrémité distale de pilier (43) fixée sur l'extrémité proximale de l'implant (36) pour définir un joint du pilier de l'implant (72), une surface externe du pilier (40) contactant une surface externe de l'implant (20) et une extrémité proximale du pilier (44) opposée à l'extrémité distale (42); et
une couronne (60), la couronne comportant une extrémité distale de couronne (64) adhérant à l'extrémité proximale du pilier (44) et une extrémité proximale de couronne opposée à l'extrémité distale de la couronne;
l'extrémité distale de la couronne comportant une marge prothétique périphérique (68) positionnée en un point distal par rapport au joint du pilier de l'implant (72), de sorte que la couronne (60) recouvre l'ensemble du joint du pilier de l'implant (72), **caractérisée en ce que** l'extrémité distale de la couronne (64) adhère sur l'extrémité proximale de l'implant (36), l'adhésion entre l'extrémité distale de la couronne (64) et l'extrémité proximale de l'implant (36) établissant l'étanchéité du joint du pilier de l'implant (72).

2. Prothèse selon la revendication 1, dans laquelle l'implant englobe un corps et un col dans une direction proximale par rapport au corps, le col comportant une première partie ayant une première largeur et une deuxième partie dans une direction proximale par rapport au corps, ayant une deuxième largeur, la deuxième largeur étant inférieure à la première largeur, la couronne s'étendant ainsi au-dessus de la deuxième largeur et non pas au-dessus de la première largeur.

3. Prothèse selon la revendication 2, dans laquelle la deuxième partie est effilée.

4. Prothèse selon la revendication 3, dans laquelle la deuxième partie est pratiquement conique, la première partie et la deuxième partie étant reliées par une partie courbée.

5. Prothèse selon la revendication 4, dans laquelle l'extrémité distale du pilier englobe un arbre fixé sur l'implant, l'extrémité proximale du pilier englobant une tête fixée sur la couronne.

6. Prothèse selon la revendication 5, dans laquelle la tête du pilier est rétrécie dans la direction proximale.

7. Prothèse selon la revendication 6, dans laquelle la tête du pilier est pratiquement conique.

8. Prothèse selon la revendication 7, dans laquelle la tête du pilier forme pratiquement un cône tronqué.

9. Prothèse selon la revendication 8, dans laquelle la tête du pilier et la deuxième partie de l'implant forment un cône pratiquement tronqué.

10. Prothèse selon la revendication 1, dans laquelle la deuxième partie est pratiquement cylindrique.

11. Prothèse selon la revendication 1, dans laquelle le pilier est fixé par filetage sur l'implant par des filetages sur l'arbre du pilier sur l'extrémité distale du pilier.

12. Prothèse selon la revendication 11, dans laquelle l'extrémité proximale du pilier englobe un moyen d'engagement d'un outil pour faire tourner le pilier pour fileter l'arbre du pilier dans l'implant.

13. Prothèse selon la revendication 12, dans laquelle le pilier englobe un collier séparé de l'arbre et pouvant être positionné sur celui-ci, le collier ayant une largeur supérieure à une largeur de l'arbre.
